# FASCICULE DE BREVET EUROPEEN

(11) **EP 3 037 463 B1**
(45) Date de publication et mention de la délivrance du brevet: **05.12.2018**
(21) Numéro de dépôt: 15198323.6
(22) Date de dépôt: 08.12.2015
(51) Int. Cl.: C08K 3/14, C08K 3/28, C08K 3/10

(54) **MATÉRIAU COMPOSITE, NOTAMMENT POUR L'HORLOGERIE**
VERBUNDMATERIAL, INSBESONDERE FÜR UHRMACHEREI
COMPOSITE MATERIAL, IN PARTICULAR FOR HOROLOGY

(30) Priorité: 22.12.2014 CH 20042014
(43) Date de publication de la demande: 29.06.2016
(73) Titulaire: Officine Panerai AG, 6312 Steinhausen (CH)
(72) Inventeur: DREYER-GONZALES, Frédéric, 1400 Cheseaux-Noreaz (CH); HOURIET, Arnaud, 2610 Saint-Imier (CH)
(74) Mandataire: Micheli & Cie SA

(56) Documents cités:
- CH-A2- 707 503
- FR-A1- 2 877 008
- DATABASE WPI Week 201444 Thomson Scientific, London, GB; AN 2014-M70451 XP002737932, & CN 103 772 988 A (ZHONGSHAN DIANSHI PLASTIC CO LTD) 7 mai 2014 (2014-05-07)

## Description

La présente invention concerne un composant horloger fabriqué en partie au moins dans un matériau composite.

Les matériaux les plus utilisés pour fabriquer des composants horlogers sont des métaux tels que l'acier, le laiton ou le maillechort. Ces matériaux présentent les avantages d'être ductiles et facilement usinables, mais ils ont une masse volumique relativement élevée et des propriétés tribologiques souvent médiocres. Les zones de frottement des composants réalisés dans de tels matériaux et destinés à travailler en glissement doivent être remplacées par des pierres ou éventuellement être lubrifiées ou faire l'objet d'un traitement de surface.

D'autres matériaux ont été proposés ces dernières années dans l'horlogerie, tels que le silicium ou le diamant. Ces matériaux sont légers et ont un bon coefficient de frottement. Cependant, ils nécessitent l'emploi de techniques coûteuses pour leur fabrication. De plus, ils sont difficiles à manipuler en raison de leur grande fragilité.

On connaît aussi par le document CN 103772988 un matériau composite polymère à haute isolation thermique pouvant comprendre du carbure de tantale. Un autre document, FR 2877008, décrit un matériau composite destiné à remplacer les alliages d'aluminium et comprenant une matrice en polymère et des particules en carbure, nitrure ou carbonitrure de tantale. Ces matériaux composites ne sont pas conçus pour améliorer le coefficient de frottement.

La présente invention vise à remédier, en partie au moins, aux inconvénients susmentionnés.

A cette fin, il est proposé un composant horloger caractérisé en ce qu'il est fabriqué en partie au moins dans un matériau composite comprenant une matrice en polymère dans laquelle sont dispersées des particules en céramique à base de tantale, le coefficient de frottement dynamique du matériau composite tel que mesuré contre de l'acier 100Cr6 par un test bille sur disque conforme à la norme ASTM G99 étant inférieur à environ 0,3.

De manière surprenante, il a été constaté qu'un faible coefficient de frottement, inférieur à environ 0,3 voire à environ 0,2 voire même à environ 0,15, pouvait être obtenu avec un matériau composite comprenant une matrice en polymère et des particules en céramique à base de tantale. Un tel coefficient de frottement permet le glissement du composant horloger sur une contre-pièce sans lubrification ni traitement de surface. Le matériau selon l'invention est en outre facilement usinable et peut présenter une faible masse volumique, inférieure à environ 2 g/cm³, voire inférieure à environ 1,5 g/cm³.

Les particules sont typiquement présentes dans le matériau dans une proportion comprise entre environ 15% et environ 40% en masse, de préférence entre environ 20% et environ 35% en masse, de préférence encore entre environ 23% et environ 32% en masse.

La matrice en polymère est par exemple une résine thermodurcissable, telle qu'une résine époxy.

Les particules sont par exemple en carbure de tantale, en nitrure de tantale ou en carbonitrure de tantale.

De préférence, les particules ont un diamètre inférieur à environ 50 µm.

Le matériau selon l'invention peut comprendre en outre des nanotubes de carbone dispersés dans la matrice en polymère, selon l'application, afin d'accroître les propriétés mécaniques du matériau.

D'autres caractéristiques et avantages de la présente invention apparaîtront à la lecture de la description détaillée suivante faite en référence aux dessins annexés dans lesquels :
- la figure 1 est une vue en perspective partielle d'un mouvement horloger utilisant le matériau composite selon l'invention ; et
- la figure 2 est un diagramme montrant une courbe C1 et une courbe C2 représentant respectivement le coefficient de frottement et la masse volumique (en g/cm³) d'un matériau composite résine époxy / carbure de tantale en fonction de la teneur du matériau en carbure de tantale (exprimée en pourcentage massique).

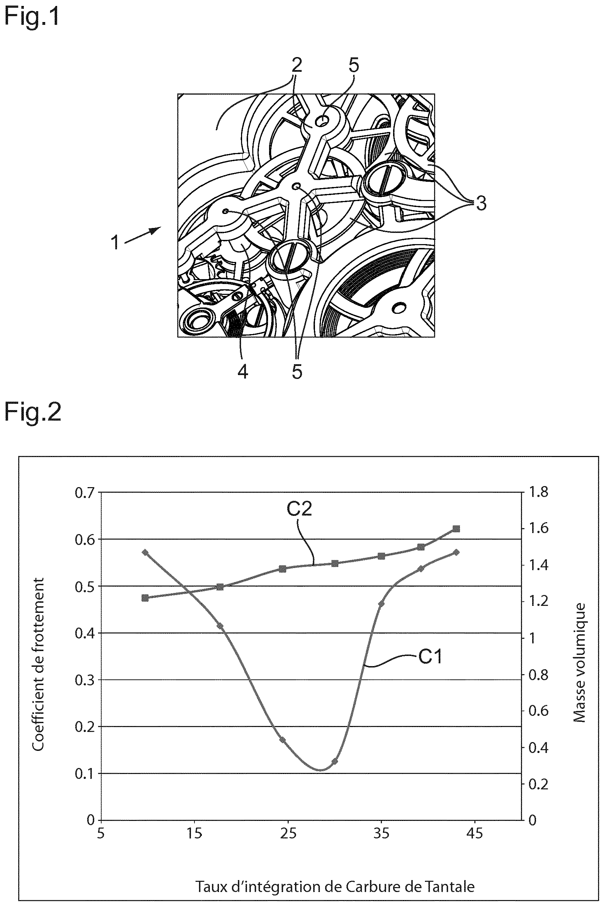

La figure 1 montre une partie d'un mouvement horloger 1 comprenant notamment des ébauches (platine et ponts) 2, des mobiles (roues et pignons dentés) 3 et des axes 4 de pivotement des mobiles 3, axes dont les pivots tournent dans des trous 5 pratiqués dans les ébauches 2. Au moins certains de ces composants 2, 3, 4 sont réalisés dans un matériau composite comprenant une matrice en polymère dans laquelle sont dispersées des particules en céramique à base de tantale.

Les présents inventeurs ont observé qu'avec un tel matériau composite, si l'on fait varier la quantité de particules dans la matrice, il existe une plage dans laquelle le coefficient de frottement dynamique du matériau composite est faible, notamment inférieur à 0,3 voire à 0,2. Dans la présente invention, on entend par « coefficient de frottement du matériau » un coefficient de frottement tel que mesuré contre de l'acier 100Cr6, par exemple dans les conditions sous-mentionnées. Tout composant réalisé dans le matériau composite selon l'invention pourra donc fonctionner sans lubrification en collaboration avec un autre composant, en particulier si cet autre composant est en acier. Ainsi, par exemple, des axes de pivotement 4 en acier peuvent pivoter sans lubrification directement dans les trous 5 des ébauches 2 réalisées dans ce matériau composite, sans qu'il soit nécessaire de munir ces trous de pierres en rubis ou analogue. Selon d'autres exemples, des mobiles 3 ou axes de pivotement 4 réalisés dans ce matériau composite peuvent fonctionner sans lubrification avec des contre-pièces en acier. Dans des variantes, les contre-pièces peuvent être en un autre matériau que l'acier, tel qu'un autre métal ou un matériau composite.

Dans la présente invention, le coefficient de frottement dynamique est mesuré par un test bille sur disque conforme à la norme ASTM G99. Le disque est fait dans le matériau composite selon l'invention et la bille est faite en acier 100Cr6. La surface du matériau composite, brute d'usinage, est nettoyée de manière standard. La bille, d'un diamètre de 6 mm, est appliquée contre le disque avec une force de 5 N sur une piste de frottement de rayon 12 mm. La vitesse linéaire est de 10 cm/s. La mesure est effectuée sur 3000 tours. Le test est réalisé sans lubrifiant, à une température de 23 ± 1 °C et à un taux d'humidité de 40 ± 10 %. Un tribomètre TRB commercialisé par la société Anton Paar peut être utilisé pour ce test.

Dans un mode de réalisation préférentiel de l'invention, la matrice est une résine thermodurcissable, plus précisément une résine époxy, et les particules sont en carbure de tantale (TaC). Le diamètre des particules est de préférence inférieur à 50 µm. La figure 2 montre une courbe C1 de l'évolution du coefficient de frottement dynamique d'un tel matériau composite en fonction de la teneur en carbure de tantale (exprimée en pourcentage massique), ainsi qu'une courbe théorique C2 de l'évolution de la masse volumique (exprimée en g/cm³) d'un tel matériau composite en fonction de la teneur en carbure de tantale. Comme on peut le voir, dans une plage d'environ 23% à environ 32% en masse, le coefficient de frottement est inférieur à 0,2 et présente même un minimum qui est inférieur à 0,13. La masse volumique du matériau est très faible, comme le montre la courbe C2. Elle est comprise entre environ 1,2 g/cm³ et environ 1,6 g/cm³ pour une teneur en carbure de tantale comprise entre environ 9% et environ 43% en masse.

Ainsi, le matériau composite selon l'invention non seulement présente de bonnes propriétés tribologiques mais en outre est léger. Fabriquer les ébauches d'un mouvement horloger dans ce matériau sans empierrage peut permettre un gain de poids dudit mouvement d'au moins 50% par rapport à l'utilisation d'ébauches classiques en laiton nickelé munies de pierres en rubis. Le matériau selon l'invention présente aussi une résistance mécanique suffisante et peut être usiné comme un alliage métallique.

Dans des variantes de l'invention, les particules peuvent être en nitrure de tantale (TaN) ou en carbonitrure de tantale (TaCN). D'autres polymères que les résines époxy peuvent être utilisés, par exemple des résines polyesters insaturées.

En plus des particules en céramique à base de tantale, le matériau composite selon l'invention peut comprendre d'autres renforts ou charges tels que des nanotubes de carbone.

Pour fabriquer le matériau composite selon l'invention, on peut incorporer les particules en céramique à base de tantale et autres charges éventuelles dans la résine à l'état liquide à l'intérieur d'un moule, effectuer le mélange des charges et de la résine, polymériser par centrifugation, puis sortir du moule des lopins que l'on pourra usiner pour former les composants souhaités. La centrifugation assure une homogénéité de la matière ainsi qu'une forte répétabilité.

Outre des ébauches, des roues et pignons d'engrenage et des axes de pivotement, des composants horlogers tels que d'autres roues (roues à colonnes, roues d'échappement, etc.), des composants d'échappement (ancre, palettes, plateaux, etc.), des disques d'affichage tels que des disques de quantième, des cames telles que des coeurs et des râteaux, des composants de guidage (paliers tels que paliers simples ou paliers amortisseurs, roulements ou parties de roulements, en particulier billes et/ou bandes de guidage d'un roulement à billes, tubes et goupilles de guidage, etc.) peuvent être réalisés dans le matériau selon l'invention.

Dans des variantes, le matériau selon l'invention peut former seulement les parties d'une pièce destinées à subir des frottements, par exemple la partie périphérique dentée d'une roue ou les palettes d'une ancre d'échappement.

## Revendications

1. Composant horloger **caractérisé en ce qu'**il est fabriqué en partie au moins dans un matériau composite comprenant une matrice en polymère dans laquelle sont dispersées des particules en céramique à base de tantale, le coefficient de frottement dynamique du matériau composite tel que mesuré contre de l'acier 100Cr6 par un test bille sur disque conforme à la norme ASTM G99 étant inférieur à environ 0,3.

2. Composant horloger selon la revendication 1, **caractérisé en ce que** ledit coefficient de frottement dynamique est inférieur à environ 0,2.

3. Composant horloger selon la revendication 2, **caractérisé en ce que** ledit coefficient de frottement dynamique est inférieur à environ 0,15.

4. Composant horloger selon l'une des revendications 1 à 3, **caractérisé en ce que** la masse volumique du matériau composite est inférieure à environ 2 g/cm³.

5. Composant horloger selon l'une des revendications 1 à 4, **caractérisé en ce que** la proportion desdites particules dans le matériau composite est comprise entre environ 15% et environ 40% en masse.

6. Composant horloger selon la revendication 5, **caractérisé en ce que** la proportion desdites particules dans le matériau composite est comprise entre environ 20% et environ 35% en masse.

7. Composant horloger selon la revendication 6, **caractérisé en ce que** la proportion desdites particules dans le matériau composite est comprise entre environ 23% et environ 32% en masse.

8. Composant horloger selon l'une des revendications 1 à 7, **caractérisé en ce que** la matrice en polymère est une résine thermodurcissable.

9. Composant horloger selon l'une des revendications 1 à 8, **caractérisé en ce que** la matrice en polymère est une résine époxy.

10. Composant horloger selon l'une des revendications 1 à 9, **caractérisé en ce que** les particules sont en carbure de tantale, en nitrure de tantale ou en carbonitrure de tantale.

11. Composant horloger selon l'une des revendications 1 à 10, **caractérisé en ce que** les particules ont un diamètre inférieur à environ 50 µm.

12. Composant horloger selon l'une des revendications 1 à 11, **caractérisé en ce que** le matériau composite comprend en outre des nanotubes de carbone dispersés dans la matrice en polymère.

13. Composant horloger selon l'une des revendications 1 à 12, **caractérisé en ce qu'**il consiste en l'un des composants suivants : ébauche, roue, pignon, palier ou autre organe de guidage, axe de pivotement, composant d'échappement, disque, came, râteau.

## Patentansprüche

1. Uhrenbauteil, **dadurch gekennzeichnet, dass** es zumindest teilweise aus einem Verbundmaterial hergestellt ist, das eine Polymer-Matrix umfasst, in der Partikel aus Keramik auf Tantalbasis dispergiert sind, wobei der dynamische Reibungskoeffizient des Verbundmaterials, wie gegen Stahl 100Cr6 durch einen Kugel-Scheibe-Test gemäß der Norm ASTM G99 gemessen, niedriger als ungefähr 0,3 ist.

2. Uhrenbauteil nach Anspruch 1, **dadurch gekennzeichnet, dass** der dynamische Reibungskoeffizient niedriger als ungefähr 0,2 ist.

3. Uhrenbauteil nach Anspruch 2, **dadurch gekennzeichnet, dass** der dynamische Reibungskoeffizient niedriger als ungefähr 0,15 ist.

4. Uhrenbauteil nach einem der Ansprüche 1 bis 3, **dadurch gekennzeichnet, dass** die Dichte des Verbundmaterials niedriger als ungefähr 2 g/cm³ ist.

5. Uhrenbauteil nach einem der Ansprüche 1 bis 4, **dadurch gekennzeichnet, dass** der Anteil der Partikel in dem Verbundmaterial zwischen ungefähr 15 und ungefähr 40 Massenprozent enthalten ist.

6. Uhrenbauteil nach Anspruch 5, **dadurch gekennzeichnet, dass** der Anteil der Partikel in dem Verbundmaterial zwischen ungefähr 20 und ungefähr 35 Massenprozent enthalten ist.

7. Uhrenbauteil nach Anspruch 6, **dadurch gekennzeichnet, dass** der Anteil der Partikel in dem Verbundmaterial zwischen ungefähr 23 und ungefähr 32 Massenprozent enthalten ist.

8. Uhrenbauteil nach einem der Ansprüche 1 bis 7, **dadurch gekennzeichnet, dass** die Polymer-Matrix ein wärmehärtendes Harz ist.

9. Uhrenbauteil nach einem der Ansprüche 1 bis 8, **dadurch gekennzeichnet, dass** die Polymer-Matrix ein Epoxidharz ist.

10. Uhrenbauteil nach einem der Ansprüche 1 bis 9, **dadurch gekennzeichnet, dass** die Partikel aus Tantalcarbid, aus Tantalnitrid oder aus Tantalcarbonitrid sind.

11. Uhrenbauteil nach einem der Ansprüche 1 bis 10, **dadurch gekennzeichnet, dass** die Partikel einen Durchmesser aufweisen, der kleiner als ungefähr 50 µm ist.

12. Uhrenbauteil nach einem der Ansprüche 1 bis 11, **dadurch gekennzeichnet, dass** das Verbundmaterial ferner Nanoröhren aus Kohlenstoff umfasst, die in der Polymer-Matrix dispergiert sind.

13. Uhrenbauteil nach einem der Ansprüche 1 bis 12, **dadurch gekennzeichnet, dass** es in einem von den folgenden Bauteilen besteht: Rohwerk, Rad, Trieb, Lager oder einem anderen Führungsorgan, Schwenkachse, Hemmungsbauteil, Scheibe, Kurvenscheibe, Rechen.

## Claims

1. Timepiece component **characterised in that** it is manufactured at least in part in a composite material comprising a polymer matrix in which tantalum-based ceramic particles are dispersed, the dynamic coefficient of friction of the composite material as measured against 100Cr6 steel by a ball-on-disk test in accordance with the ASTM G99 standard being less than about 0.3.

2. Timepiece component according to claim 1, **characterised in that** said dynamic coefficient of friction is less than about 0.2.

3. Timepiece component according to claim 2, **characterised in that** said dynamic coefficient of friction is less than about 0.15.

4. Timepiece component according to one of claims 1 to 3, **characterised in that** the density of the composite material is lower than about 2 g/cm³.

5. Timepiece component according to one of claims 1 to 4, **characterised in that** the proportion of said particles in the composite material is between about 15% and about 40% in mass.

6. Timepiece component according to claim 5, **characterised in that** the proportion of said particles in the composite material is between about 20% and about 35% in mass.

7. Timepiece component according to claim 6, **characterised in that** the proportion of said particles in the composite material is between about 23% and about 32% in mass.

8. Timepiece component according to one of claims 1 to 7, **characterised in that** the polymer matrix is a thermosetting resin.

9. Timepiece component according to one of claims 1 to 8, **characterised in that** the polymer matrix is an epoxy resin.

10. Timepiece component according to one of claims 1 to 9, **characterised in that** the particles are made of tantalum carbide, tantalum nitride or tantalum carbonitride.

11. Timepiece component according to one of claims 1 to 10, **characterised in that** the particles have a diameter less than about 50 µm.

12. Timepiece component according to one of claims 1 to 11, **characterised in that** the composite material further comprises carbon nanotubes dispersed in the polymer matrix.

13. Timepiece component according to one of claims 1 to 12, **characterised in that** it consists of one of the following components: blank, wheel, pinion, bearing or other guide member, pivot shaft, escapement component, disk, cam, rack.
